# EUROPEAN PATENT APPLICATION

(11) **EP 2 287 511 A1**
(43) Date of publication of application: **23.02.2011**
(21) Application number: 09168108.0
(22) Date of filing: 18.08.2009
(51) Int. Cl.: F16L 55/134

(54) **Pipeline plug**

(71) Applicant: Per Aarsleff A/S, 8230 Åbyhøj (DK)
(72) Inventor: The designation of the inventor has not yet been filed
(74) Representative: Nielsen, Henrik Sten

(57) **Abstract**

The invention relates to a method and system for permanently sealing a branch waste water pipeline (38) at the junction between a branch waste water pipeline and a main waste water pipeline (36) by providing a flexible bag (22) of a substantially fluid-tight material having a hose (26) for supplying fluids into the flexible bag. The flexible bag defines a deflated state defining a diameter smaller than the diameter of the branch pipeline, and a filled state defining a diameter at least equal to the diameter of the branch pipeline. The method and system furthermore comprise a remote controlled pipeline device (12) accommodating the flexible bag in the deflated state. The remote controlled pipeline device is introduced into the main waste water pipeline, allowing the pipeline device to assume a position adjacent to the branch waste water pipeline. The deflated flexible bag is introduced into the branch waste water pipeline by using the pipeline device and is filled with a water-based curable substance via a hose, permitting the curable substance to harden.

## Description

The present invention relates to methods and systems for permanently sealing a branch pipeline at the junction between the branch pipeline and a main pipeline.

Waste water pipeline systems, such as sewage systems, are normally constructed having a main waste water pipeline of typically a large diameter running underground for transporting waste water from a built-up area to a water treatment plant. The main waste water pipeline typically runs under a street for being able to conveniently serve the surrounding buildings and for being accessible through manholes in the street A branch waste water pipeline is a pipeline of typically smaller diameter which transports the waste water away from a single building and joins the main waste water pipeline at a junction typically located under the street. The branch pipeline has a distal end connecting to the building plumbing or the like, and a proximal end forming a junction with the main pipeline.

Main waste water pipelines and branch waste water pipelines both typically have a diameter which is too small for allowing maintenance personnel to enter the pipeline and perform service and inspection work therein. In most cases, the service and inspection work must be carried out by using a remote controlled pipeline device. A pipeline device typically constitutes a small motorized carrier or tractor having suitable dimensions for being introduced into the pipeline. Modern pipeline devices have additional features such as built-in cameras and manipulator arms. One example of a pipeline device is the "LISY" from the company IBAK. Another example of a pipeline device is shown in UK patent application GB 2 147 682.

The number of branch pipelines connecting to the main pipeline may vary during the lifetime of the main pipeline. For instance, an old building may be torn down and the land may be used for other purposes not requiring a branch pipeline or a different branch pipeline, such as when a building is replaced by a recreational area or a car park. Even in case a new building is being constructed to replace an old building, often the old branch pipelines cannot be used since the new building may have a different position, orientation or layout compared to the previous building. Additionally, a new branch pipeline may be required simply due to wear, damages and changes in the plumbing of the building. In such cases, the old branch pipeline is left unused.

Such unused branch pipelines may constitute entry points for animals such as mice, rats and similar rodents into the pipeline system. When the distal end of the branch pipeline does not connect to the building plumbing anymore, the distal end of the branch pipeline may simply form an opening. The animals may e.g. enter the unused branch pipeline through the distal opening and reach the main pipeline at the junction between the main pipeline and the unused branch pipeline. Furthermore, animals may build nests inside the branch pipeline since it will remain essentially dry. It is generally undesired to have any animals residing within the pipeline system since animal activities may cause damage and blockage. In addition to animals, dust and excessive amounts of water may occasionally enter the branch pipeline and cause problems such as blockage or flooding. It is therefore desirable to block unused branch pipelines for preventing animals from entering the main pipeline.

There exist several prior art technologies for blocking branch pipelines. One example is US patent application No. 2005/0257846 A1, where it is proposed to insert an inflatable resin-impregnated plug through the distal opening of the branch pipeline and pull and/or push the plug towards the main pipeline. The sewage plug is inflated in the vicinity of the main pipeline and is allowed to cure for subsequently blocking the access between the branch pipeline and the main pipeline. However, in some cases access from the distal opening of the branch pipeline may be impossible due to construction work or damage.

In Japanese patent application No. 2008 196151 it is therefore suggested to approach the branch pipeline from the main pipeline. Access points to the main pipeline are typically allowed every few hundred meters by a manhole or the like. A transportation vehicle is used for introducing a work device into the branch pipeline.

In US patent No. 5,040,922 mastic in injected into the branch pipeline from the main pipeline. For reducing the amount of mastic, an airbag is inflated into the branch pipeline defining the distal end of the mastic closure. The branch pipeline may be reopened by drilling through the mastic once is has been hardened.

In US patent No. 5,878,784 an inflatable bag is inserted into a pipeline and inflated by use of an expandable polymeric foam injected into the bag.

In international application WO 85/03758 a device for injecting concrete from a main pipe into a branch pipe is being described.

In US patent application No. 2004/0003855 an inflatable plug in the main pipe is used for blocking the branch pipe.

A further example of prior art may be found in the Danish Workers' Supply and Drainage Systems approval No. VA 2.99/17338 published by ETA Denmark.

The object of the present invention is to provide methods and systems for sealing branch pipelines by introducing a pipeline sealing system through the main pipeline. In particular, the present invention provides a simple, quick and reliable way to seal off a branch pipeline at the junction between the branch pipeline and the main pipeline without the need of accessing the distal end of the branch pipeline.

It is an advantage of the present invention compared to the prior art that the sealing may be performed using a commercially available pipeline device which is well known in the art and readily available to most practitioners within the field of pipeline renovation.

It is a further advantage of the present invention that the pipeline device is used during a relatively short period of time in comparison with the prior art.

It is a feature of the present invention that the environmental impact of the technologies according to the present invention may be held at a minimum since essentially only environmentally friendly materials, such as water-based substances, are used.

The above objects, advantages and features together with numerous other objects, advantages and features, which will be evident from the below detailed description of preferred embodiments, are according to a first aspect of the present invention obtained by a method for permanently sealing a branch waste water pipeline at the junction between the branch waste water pipeline and a main waste water pipeline, the method comprising the following steps:
I) providing a flexible bag of a substantially fluid-tight material having a hose for supplying fluids into the flexible bag, the flexible bag defining a deflated state defining a diameter smaller than the diameter of the branch pipeline, and a filled state defining a diameter at least equal to the diameter of the branch pipeline,
II) providing a remote controlled pipeline device, the pipeline device accommodating the flexible bag in the deflated state,
II) introducing the remote controlled pipeline device into the main waste water pipeline and allowing the pipeline device to assume a position adjacent to the branch waste water pipeline,
IV) introducing the deflated flexible bag into the branch waste water pipeline by using the pipeline device, and
V) filling the flexible bag with a water-based curable substance via the hose and permitting the curable substance to harden.

Waste water in particular includes sewage water and drain water. The main pipeline transports waste water away from urban or industrial areas towards water treatment plants or surface waters such as rivers, lakes or the ocean. The branch pipeline carries waste water from a waste water source such as a building plumbing or a drain to the main pipeline. The flexible bag should be deflatable and preferably foldable. The flexible bag should be substantially fluid-tight, which should be construed to mean that gases and to some extent water-based substances may be allowed to penetrate the bag, at least when the bag is subjected to a high pressure, i.e. the flexible bag should not be pressure-tight. It is further evident that the diameter of the bag when deflated should be small enough for the bag to fit into the branch pipeline, at least the portion of the branch pipeline adjacent to the main pipeline. The diameter of the main pipeline is understood to be larger than the diameter of the branch pipeline. When the flexible bag is filled, it should define a diameter sufficiently large to completely block the branch pipeline and for the flexible bag to be held in place by the friction force between the outer surface of the flexible bag and the inner wall of the branch pipeline.

The pipeline device is generally known in the prior art as a motorized carrier. The typical use of the pipeline device is for allowing inspection and maintenance work to be carried out inside pipelines, especially pipelines having a small diameter being too small for allowing maintenance personnel to enter. The pipeline device should have a robotic arm or similar manipulation device for being able to introduce the flexible bag into the branch pipeline. Preferably, the pipeline device additionally comprises some sort of navigational aid, such as travel distance measurement, camera, radar, IR, or UV detectors for allowing the pipeline device to be operated from the surface, i.e. outside the pipeline system. The flexible bag is preferably held by the arm of the pipeline device and introduced into the branch pipeline by remote control.

The flexible bag is connected to a hose for introducing the water-based curable substance. When the water-based curable substance is introduced into the flexible bag it will inflate. The curable substance should be water-based for minimum impact on the environment. When the curable substance has been introduced, the flexible bag is being held in place and the pipeline device may be removed or used for other work while the water-based substance is curing or hardening. The hose may have a joint constituting a circular predetermined breaking area, so that when the water-based substance is cured, the operator may pull the hose, thereby breaking the joint so that the hose may be recovered and disposed of.

According to a further embodiment of the first aspect, the method comprises an intermediate step of inflating the flexible bag by introducing compressed gas into the flexible bag via the hose, the intermediate step being performed in between steps IV and V. By inflating the flexible bag by gas via the hose prior to introducing the water-based curable substance, the position of the flexible bag may be inspected, and in case the flexible bag is shifting position or not fully blocks the branch pipeline, the gas may be let out and the flexible bag may assume the deflated state and subsequently be repositioned. When the flexible bag has been inflated at a suitable position, the water-based curable substance is introduced through the same hose and the air leaks through the flexible bag to the outside, since the flexible bag is not pressure-tight, while the bag remains inflated. In case a pressure-tight flexible bag is used, an overpressure valve may be included in the flexible bag for avoiding excessive pressure inside the bag.

According to a further embodiment of the first aspect, the pipeline device has a flexible guiding rod and the flexible bag has an exterior pocket co-operating with the flexible guiding rod for guiding and supporting the flexible bag when the flexible bag is introduced into the branch pipe. By using a flexible guiding rod when introducing the bag into the branch pipeline the positioning of the bag may be simplified. The flexible guiding rod may preferably be attached to the arm or the pipeline device. The guiding rod is preferably introduced into the exterior pocket when the pipeline device is prepared for entering the main pipeline. When the flexible bag is introduced into the branch pipeline, the flexible rod may be extended for the flexible bag to be properly positioned into the branch pipeline. When the flexible bag is filled by curable substance, the guiding rod is retracted to prevent it from getting stuck inside the branch pipeline. The movement of the flexible guiding rod may preferably be remote controlled. The flexible guiding rod may additionally and optionally act as a support of the flexible bag when the hose is being pulled off the bag after curing.

According to a further embodiment of the first aspect, the method comprises a final step of cutting the flexible hose near the flexible bag by using a cutting device mounted on the pipeline device, the final step being performed after step V. Since the water-based curable substance in the hose will typically harden as well, the hose may be cut off when the substance has hardened. For this purpose a cutting device may be fitted on the pipeline device. The pipeline device may thus be returned to the flexible bag after the bag has hardened for cutting the hose near the flexible bag. The hose may thereafter be retracted to the manhole and subsequently disposed of.

According to a further embodiment of the first aspect, the cutting device constitutes an angle grinder being attached to the pipeline device. The angle grinder is preferably powered by compressed gas, such as compressed air. Preferably, the angle grinder is attached to the arm of the pipeline device for simple maneuverability.

According to a further embodiment of the first aspect, the flexible bag is substantially non-elastic and preferably self-supporting. The flexible bag is preferably folded when in the deflated state. By having a non-elastic self-supporting bag, the bag may be inflated and may thereafter hold its position without constantly having to be pressurized by curable substance or compressed gas. It also allows a change from supplying compressed gas to supplying curable substance without a loss of pressure there between and without the flexible bag collapsing. By using a non-elastic flexible bag, the risk of explosion of the bag is additionally reduced.. However, it is of course contemplated that all flexible materials have a certain amount of flexibility.

According to a further embodiment of the first aspect, the water-based curable substance increases its volume by 0-10 percent, preferably 1-5 percent, more preferably 2-4 percent, when the curable substance is hardening. Preferably, a small increase of volume during or after curing is preferred for allowing the bag to subject the inner wall of the branch pipeline to a fixation pressure. The increase in volume must not be too large, otherwise the flexible bag may explode or the branch pipeline may be damaged.

According to a further embodiment of the first aspect, the curable substance comprises a mixture of water and cement, the mixture being e.g. concrete or grout. Mixtures of water and cement, such as concrete and grout, are water-based curable substances which are environmentally friendly and may be used for the above purpose. Preferably, quick-curing cement is used. Quick-curing cement may harden within a time period of about 45 minutes.

According to a further embodiment of the first aspect, the flexible bag is made of nylon. Nylon is preferred due to its fluid-tightness, high flexibility and superior durability. Nylon is also fairly resistant to animal attacks.

According to a further embodiment of the first aspect, the flexible bag is held in the deflated state by at least one elastic band, the elastic band being breakable or rupturable when the flexible bag is being filled. By using elastic bands the flexible bag may be held securely in the folded state for it to be easily inserted into the branch pipeline. The elastic bands may break or rupture when the bag is filled for assuming the inflated state.

According to a further embodiment of the first aspect, the pipeline device includes a camera for monitoring the flexible bag. The camera may comprise a digital CCD camera or alternatively a video camera. The camera may be coupled to a monitor located outside the pipeline. Preferably, at least some photos are taken of the flexible bag when inserted into the branch pipeline to ensure a correct positioning of the bag. The photos may be transmitted and stored either in digital or in analog format.

According to a further embodiment of the first aspect, the branch waste water pipeline has a diameter between 50 and 500 mm, preferably between 100 and 200mm, such as 100 mm, 125 mm, 150 mm or 200 mm. Such dimensions are common for branch pipelines. Preferably, a specific bag size is used for each branch pipeline dimension, or alternatively one bag size may be used for several branch pipeline dimensions. According to a further embodiment of the first aspect, the branch waste water pipeline is made of plastics, concrete, steel or clay. The method according to the first aspect may be used together with several different types of pipeline.

The above objects, advantages and features together with numerous other objects, advantages and features, which will be evident from the below detailed description of preferred embodiments, are according to a second aspect of the present invention obtained by a system for permanently sealing a branch waste water pipeline at the junction between the branch waste water pipeline and a main waste water pipeline, the system comprising:
a remote-controlled pipeline device for being introducing into the main waste water pipeline and being allowed to assume a position adjacent to the branch waste water pipeline,
a flexible bag of substantially fluid tight material for being accommodated on the pipeline device and introduced into the branch waste water pipeline by using the pipeline device, the flexible bag defining a deflated state defining a diameter smaller than the diameter of the branch pipeline, and a filled state defining a diameter at least equal to the diameter of the branch pipeline,
a hose for supplying fluids into the bag, and
a water-based curable substance for being filled into the flexible bag via the hose.

It is evident that the above system according to the second aspect of the present invention may be used together with the method according to the first aspect of the present invention and that any of the features of the first aspect of the present invention may be applied to the second aspect of the present invention.

### BRIEF DESCRIPTION OF THE DRAWING

Fig. 1 shows a pipeline sealing system according to the present invention when the flexible bag is in the inflated state.
Fig. 2 shows a pipeline sealing system according to the present invention when the flexible bag is in the deflated state.
Fig. 3 shows the pipeline sealing system when introduced through the manhole into the main pipeline of the pipeline system.
Fig. 4 shows the pipeline sealing system when being positioned adjacent to the branch pipeline.
Fig. 5 shows the pipeline sealing system when the flexible bag is inflated in the branch pipeline.
Fig. 6 shows the pipeline sealing system when concrete is injecting into the inflated flexible bag.
Fig. 7 shows the pipeline sealing system when the hose is cut by using an angle grinder.
Fig. 8 shows a sealed branch pipeline when the hose has been cut.

### DETAILED DESCRIPTION OF THE DRAWING

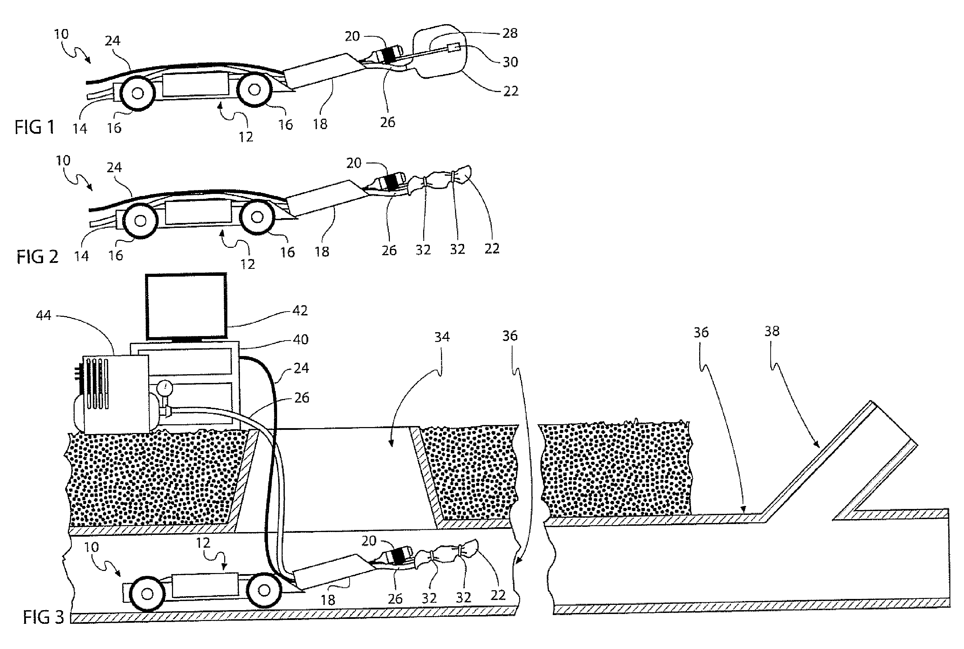

Fig. 1 shows a pipeline sealing system 10 according to the present invention. The pipeline sealing system 10 includes a pipeline device 12. The pipeline device 12 includes a motorized carrier or tractor 14 which is driven by four wheels 16. It is contemplated that the wheels 16 may be replaced by chains or any similar type of mechanism for facilitating movement of the carrier 14. The wheels 16 are driven by e.g. an electrical motor. The front part of the carrier 14 includes a manipulation arm 18 being movable in relation to the carrier 14. The arm 18 accommodates a camera 20. Due to the obscure environment inside the pipeline system, the camera 20 may preferably also include an illumination device such as a spot light etc. for allowing good quality pictures to be produced by the camera 20. The camera 20 is preferably a digital camera. However, an analog camera may be equally feasible. The arm 18 further accommodates a flexible bag 22, here shown in an inflated state. The flexible bag 22 is made of a non-elastic and self-supporting material, presently being nylon.. The flexible bag 22 may comprise rat poison or the like for additionally deterring animals from approaching and possibly damaging the flexible bag 22. The flexible bag 22 is connected to a flexible hose 26, presently being a rubber hose. The camera 20 is connected to a cable 24 for transmitting visual data from the camera 20. The cable 24 additionally transmits control signals controlling the movements of the camera 24, the wheels 16 and the arm 18. The arm 18 further includes a guiding rod 28 which is inserted into a pocket 30 of the flexible bag 22. Thereby, the guiding rod 28 holds the flexible bag 22 in a stable position and allows the flexible bag 22 to be moved when the arm 18 is moved. The guiding rod 28 may optionally be movable.

Fig. 2 shows the pipeline sealing system 10 of Fig. 1, where the flexible bag 22 has been deflated and folded. The flexible bag 22 is held in a deflated, folded and compact state by two elastic bands 32. The flexible bag 22 now has a diameter being less than the diameter of the branch pipeline intended to be sealed off.

Fig. 3 shows the pipeline sealing system 10 when it has been lowered into a manhole 34. The pipeline device 12 thus rests at the bottom of the manhole inside a main pipeline 36. The pipeline device 12 is oriented towards a branch pipeline 38 which is intended to be sealed off. The cable 24 leading from the camera 20 is connected to a control centre 40 which is used for receiving the visual data from the camera 20. The cable 24 is also used for sending the control signals to the pipeline device 12 for controlling the camera 20, the movement of the arm 18 and the movement of the wheels 16 of the pipeline device 12. The cable 24 may also be used for providing electrical power to the camera 20, the arm 18 and the pipeline device 12. The pipeline device 12 may alternatively be powered by a battery, in which case the cable 24 may be omitted and the control signals and visual data may be transferred by wireless technologies such as radio.

The visual data received by the control centre 40 are displayed on a monitor 42. The control centre 40 may preferably be capable of storing at least some of the visual data received on a computer memory such as a floppy disc, hard disc or flash memory and/or be capable of making paper print-outs of the received visual data. The flexible hose 26 which is connected to the flexible bag 22 has an opposite end which is further connected to an air compressor 44. The air compressor 44 is initially turned off. By operating the control centre 40, the pipeline device 12 may be moved towards the branch pipeline 38.

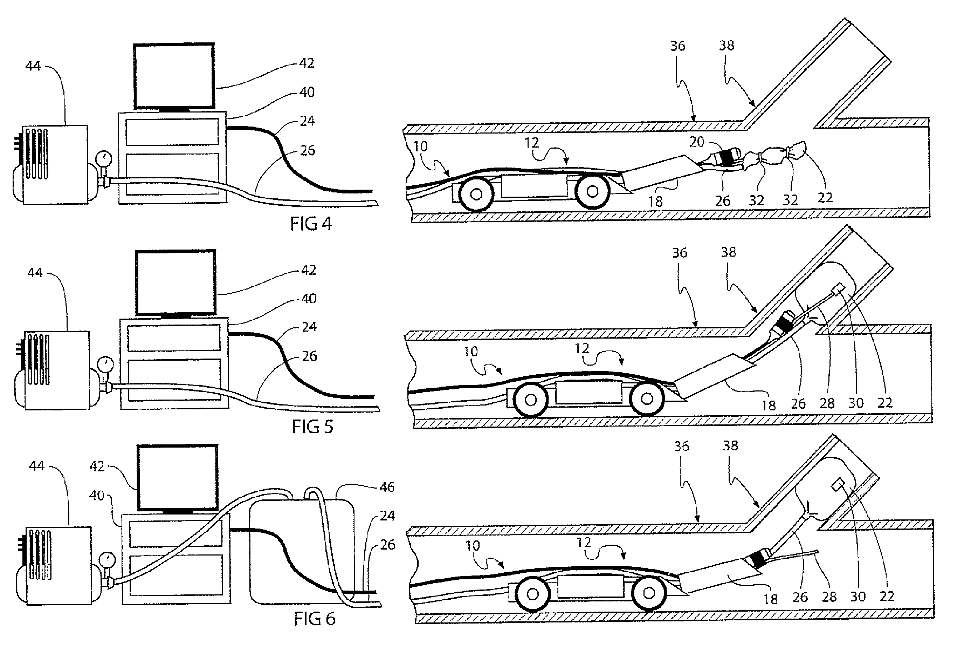

Fig. 4 shows the pipeline sealing system 10 when the pipeline device 12 has been moved inside the main pipeline 36 to a position adjacent to the junction between the main pipeline 36 and a branch pipeline 38. The pipeline device 12 may be controlled with the aid of the monitor 42 for the flexible bag 22 to be positioned just outside the branch pipeline 38.

Fig. 5 shows the pipeline sealing system 10 when the arm 18 has been moved in a direction towards the branch pipeline 38. It should be noted that although in the presently described embodiment the arm 18 has only one degree of freedom (rotational), in practice the arm 18 preferably may have several degrees of freedom for cooperating with branch pipes having various orientation in relation to the main pipe 36. The flexible bag 22 may be positioned inside the branch pipeline 38 with the aid of the camera 20 and the monitor 42. By extending the guiding rod 28, which has been inserted into the pocket 30 of the flexible bag 22, the flexible bag 22 may be inserted into the branch pipeline 38 and positioned at a suitable distance from the junction between the main pipeline 36 and the branch pipeline 38. When the flexible bag 22 has been positioned at a suitable location, preferably being as close to the main pipeline as possible, the air compressor 44 is activated and the flexible bag 22 is filled with air. When the flexible bag 22 is filled with air, the elastic bands 32 are broken or ruptured and the flexible bag 22 unfolds. When filled with compressed air, the flexible bag 22 now should have a size being at least equal to the diameter of the branch pipeline 38 for completely blocking the branch pipeline 38. In case the flexible bag 22 misaligns when being unfolded, the air may be let out of the bag 22 and the alignment be corrected before the bag 22 is refilled.

Fig. 6 shows the pipeline sealing system 10 when the flexible bag 22 has been filled with compressed air. The flexible bag 22 is thereby fixated to the walls of the branch pipeline 38. The flexible hose 26 is hereafter disconnected from the air compressor 44 and connected to a concrete supply 46, allowing a fast curable concrete mixture to enter the flexible bag 22. The concrete supply 46 is also connected to the air compressor 44, and when the air compressor 44 is turned on, the concrete mixture will flow from the concrete supply 46 into the flexible bag 22 by the use of compressed air as propellant. When the flexible bag 22 is filled with concrete, the guiding rod 28 is retracted from the branch pipeline 38, while the flexible bag 22 remains inside the branch pipeline 38. The flexible bag 22 is thereafter resting for about 45 minutes for allowing the concrete to harden.

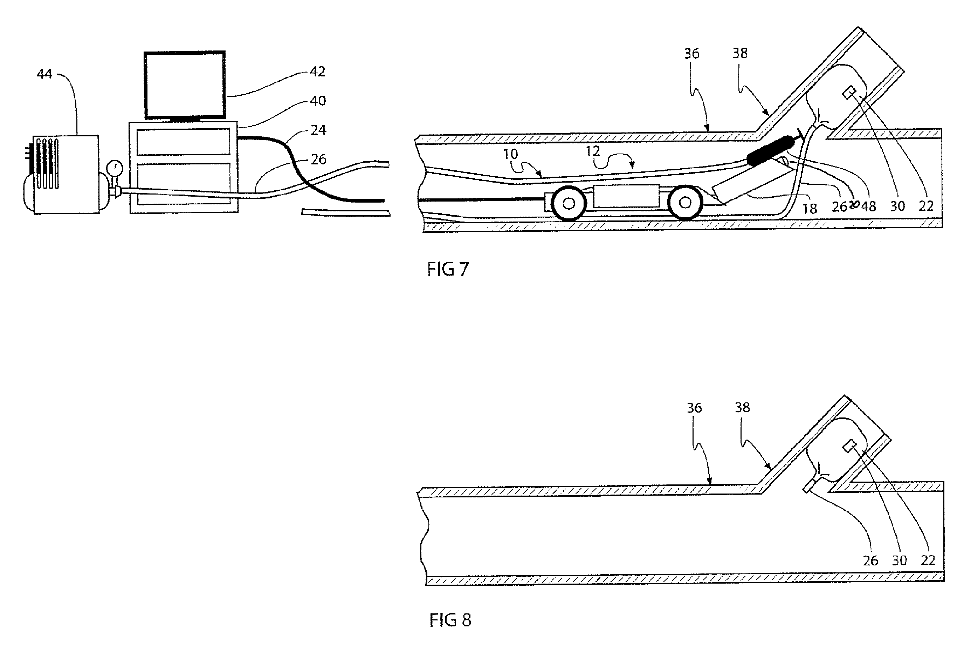

Fig. 7 shows the pipeline sealing system 10 when the concrete has hardened. During the time period when the flexible bag 22 is resting, the pipeline device 12 may be retracted to the manhole 44 and used for other purposes. Optionally, the flexible hose 26 may be disconnected as well since the flexible bag is self-supporting. The arm 18 of the pipeline device 12 may thereafter be fitted with an angle grinder 48 driven by compressed air, and the pipeline device 12 may be moved back into the main pipeline 36 to the flexible bag 22. After about 45 minutes of curing, the flexible hose 26 may be cut at the location close to the flexible bag 22 by using the angle grinder 48. The angle grinder may be observed by the camera 20 and controlled by the arm 18. The pipeline device 12 may thereafter be retracted to the manhole 44. Hereafter, the sealing is finished.

Fig. 8 shows the finished branch pipeline 38. The flexible bag 22 is filled by hardened concrete, preventing any passage between the branch pipeline 38 and the main pipeline 36. A small piece of the hose 26 is visible as well. By using the pipeline device 12 and the camera 20, the flexible bag 22 may optionally be inspected and a photo may be taken and stored in the control centre for proof of the successful sealing of the branch pipeline 38.

Although the present invention has been described above with reference to specific embodiments of the sealing system, it is of course to be contemplated that numerous modifications may be deduced by a person having ordinary skill in the art, and modifications readily perceivable by a person having ordinary skill in the art are consequently to be construed part of the present invention as defined in the appended claims.

### List of parts with reference to the figures

10. Sealing system
12. Pipeline device
14. Carrier
16. Wheel
18. Arm
20. Camera
22. Flexible bag
24. Cable
26. Flexible hose
28. Guiding rod
30. Pocket
32. Elastic band
34. Manhole
36. Main pipeline
38. Branch pipeline
40. Control Centre
42. Monitor
44. Air compressor
46. Concrete supply
48. Angle grinder

## Claims

1. A method for permanently sealing a branch waste water pipeline at the junction between said branch waste water pipeline and a main waste water pipeline, said method comprising the following steps:
I) providing a flexible bag of a substantially fluid-tight material having a hose for supplying fluids into said flexible bag, said flexible bag defining a deflated state defining a diameter smaller than the diameter of said branch pipeline, and a filled state defining a diameter at least equal to the diameter of said branch pipeline,
II) providing a remote controlled pipeline device, said pipeline device accommodating said flexible bag in said deflated state,
II) introducing said remote controlled pipeline device into said main waste water pipeline and allowing said pipeline device to assume a position adjacent to said branch waste water pipeline,
IV) introducing said deflated flexible bag into said branch waste water pipeline by using said pipeline device, and
V) filling said flexible bag with a water-based curable substance via said hose and permitting said curable substance to harden.

2. The method according to claim 1, further comprising an intermediate step of inflating said flexible bag by introducing compressed gas into said flexible bag via said hose, said intermediate step being performed in between steps IV and V.

3. The method according to any of the preceding claims, wherein said pipeline device has a flexible guiding rod and said flexible bag has an exterior pocket co-operating with said flexible guiding rod for guiding and supporting said flexible bag when said flexible bag is introduced into said branch pipe.

4. The method according to any of the preceding claims, further comprising a final step of cutting said flexible hose near said flexible bag by using a cutting device mounted on said pipeline device, said final step being performed after step V.

5. The method according to claim 3, wherein said cutting device constitutes an angle grinder being attached to said pipeline device.

6. The method according to any of the preceding claims, wherein said flexible bag is substantially non-elastic and preferably self-supporting.

7. The method according to any of the preceding claims, wherein said water-based curable substance increases its volume by 0-10 percent, preferably 1-5 percent, more preferably 2-4 percent, when said curable substance is hardening.

8. The method according to any of the preceding claims, wherein said curable substance comprises a mixture of water and cement, said mixture being e.g. concrete or grout.

9. The method according to any of the preceding claims, wherein said flexible bag is made of nylon.

10. The method according to any of the preceding claims, wherein said flexible bag is held in said deflated state by at least one elastic band, said elastic band being breakable or rupturable when said flexible bag is being filled.

11. The method according to any of the preceding claims, wherein said pipeline device includes a camera for monitoring said flexible bag.

12. The method according to any of the preceding claims, wherein said branch waste water pipeline has a diameter between 50 and 500 mm, preferably between 100 and 200 mm, such as 100 mm, 125 mm, 150 mm or 200 mm.

13. The method according to any of the preceding claims, wherein said branch waste water pipeline is made of plastic, concrete, steel or clay.

14. A system for permanently sealing a branch waste water pipeline at the junction between said branch waste water pipeline and a main waste water pipeline, said system comprising:
a remote controlled pipeline device for being introducing into said main waste water pipeline and being allowed to assume a position adjacent to said branch waste water pipeline,
a flexible bag of substantially fluid-tight material for being accommodated on said pipeline device and introduced into said branch waste water pipeline by using said pipeline device, said flexible bag defining a deflated state defining a diameter smaller than the diameter of said branch pipeline, and a filled state defining a diameter at least equal to the diameter of said branch pipeline,
a hose for supplying fluids into said bag, and
a water-based curable substance for being filled into said flexible bag via said hose.

15. The system according to claim 14, further including any of the features described by any of the claims 2-13.
